# FASCICULE DE BREVET EUROPEEN

(11) **EP 2 045 277 B1**
(45) Date de publication et mention de la délivrance du brevet: **09.03.2011**
(21) Numéro de dépôt: 09150873.9
(22) Date de dépôt: 16.05.2003
(51) Int. Cl.: C08F 14/00, C08F 8/22, C08F 2/38

(54) **Procédé de polymérisation radicalaire pour préparer des copolymères à blocs et copolymères à blocs**
Verfahren zur radikalären Polymerisation von Blockpolymeren und Blockpolymere
Process for the polymerisation of blockpolymers and blockpolymers

(30) Priorité: 17.05.2002 FR 0206246
(43) Date de publication de la demande: 08.04.2009
(62) Demande divisionnaire de: 03752772.8
(73) Titulaire: SOLVAY (Société Anonyme), 1050 Bruxelles (BE)
(72) Inventeur: Lacroix-Desmazes, Patrick, 34090, Montpellier (FR); Severac, Romain, 78440 Gargenville (FR); Boutevin, Bernard, 34090, Montpellier (FR); Bodart, Vincent, 5001, Namur (BE); Kurowski, Vincent, 7730, Estaimbourg (BE)
(74) Mandataire: Jacques, Philippe

(56) Documents cités:
- FR-A- 2 318 177
- US-A- 3 251 810

## Description

La présente invention concerne des procédés de polymérisation radicalaire pour la préparation de polymères halogénés et des polymères à la préparation desquels les procédés de polymérisation dont objet sont particulièrement bien adaptés.

Les polymères halogénés sont habituellement préparés selon un procédé de polymérisation radicalaire « classique » à l'intervention d'un monomère halogéné et d'un agent générateur de radicaux, lequel initie la croissance des chaînes polymériques. Selon ce procédé, le temps nécessaire pour qu'une chaîne de polymère croisse jusqu'à atteindre sa taille finale est très court, souvent inférieur à la seconde. Aussi, tout au long d'une polymérisation, de nouvelles chaînes naissent-elles, croissent et « meurent » quasi aussitôt par recombinaison, par disproportionnement ou par transfert de radicaux. Cette « mort » a un caractère aléatoire, statistique ; elle dépend notamment de la température depolymérisation et de la viscosité du milieu. De la sorte, on obtient en fin de polymérisation un polymère halogéné ayant une distribution de masse moléculaire statistiquement étalée, dont l'indice de polydispersité (M_{w}/Mₙ) et le rapport M_{z}/M_{w} valent habituellement au moins 2. Un tel procédé ne permet pas de synthétiser des polymères ayant une distribution de masse moléculaire étroite et contrôlée. Il ne permet pas non plus de fabriquer des copolymères à blocs.

Certes, les polymères halogénés préparés par le procédé susmentionné sont appréciés parce qu'ils présentent plusieurs propriétés intéressantes, notamment une résistance chimique élevée aux alcalis et aux alcools, ainsi qu'une résistance élevée au feu. Plus particulièrement, les polymères du chlorure de vinyle préparés par le procédé susmentionné sont appréciés parce qu'ils peuvent au besoin être assouplis par mélange avec des plastifiants pour fabriquer des articles souples comme des similicuirs.

Pour autant, ils présentent un certain nombre de points faibles, le principal étant que les nombreuses propriétés de ces polymères qui dépendent de la masse moléculaire sont hétérogènes à l'échelle moléculaire, celles-ci pouvant en effet varier d'une chaîne polymérique à une autre de la même façon que la masse moléculaire elle-même. En particulier, la présence de chaînes polymériques de très faible masse moléculaire au sein des polymères halogénés de l'art antérieur dégrade sensiblement leur stabilité thermique ; elle dégrade aussi sensiblement les propriétés mécaniques des articles fabriqués au départ de ceux-ci, notamment leur résistance à la rupture, à l'abrasion et à la griffe. Inversement, la présence de chaînes polymériques de masse moléculaire très élevée au sein de ces mêmes polymères halogénés rend plus difficile leur mise en oeuvre (viscosité en fondu plus élevée) ; elle dégrade aussi sensiblement les propriétés mécaniques des articles plastifiés fabriqués au départ de ceux-ci par défaut de gélification (mélange imparfait, au niveau moléculaire, du polymère halogéné et du plastifiant), et d'autres propriétés de ces articles comme la transparence et le fini de surface.

On a déjà cherché à pallier les inconvénients du procédé de polymérisation radicalaire « classique » susmentionné et les points faibles des résines halogénées préparées par ce procédé en développant un procédé de polymérisation décrit dans la demande de brevet EP 617 057 A. Ce procédé fait intervenir, outre le monomère halogéné et l'agent générateur de radicaux intervenant dans le procédé classique, un agent de transfert organique iodé comprenant au moins un atome d'iode lié à un atome de carbone primaire tel que le 1-chloro-1-iodoéthane. Il « singe », selon les termes mêmes employés dans cette demande, un procédé de polymérisation radicalaire vivante « idéal », en ce sens que, comme le montre l'exemple 4 de la demande de brevet susmentionnée, la masse moléculaire moyenne en nombre (ou en poids) des polymères halogénés synthétisés par ce procédé augmente au fur et à mesure qu'est polymérisé le monomère halogéné. Toutefois, l'indice de polydispersité et le rapport M_{z}/M_{w} des polymères halogénés synthétisés par ce procédé, quoiqu'inférieurs à ceux des polymères halogénés préparés par le procédé classique, n'en demeurent pas moins élevés (par exemple, indice de polydispersité supérieur ou égal à 1,70 pour des homopolymères du chlorure de vinyle), ce qui montre que le procédé en question est fortement parasité, tout comme le procédé classique, par des réactions de transfert et/ou de disproportionnement et/ou de recombinaison, lesquelles interrompent ou arrêtent la croissance des chaînes polymériques. Un autre inconvénient de ce procédé de l'art antérieur réside dans la nécessité de mettre en oeuvre un agent de transfert organique iodé, lequel est généralement coûteux et augmente le prix de revient du polymère halogéné.

Mettre au point un procédé de polymérisation radicalaire de monomères halogénés plus performant que les procédés de l'art antérieur apparaissait à l'homme du métier comme un problème particulièrement difficile, car les monomères halogénés, notamment le chlorure de vinyle, le fluorure de vinyle, le chlorure de vinylidène et le fluorure de vinylidène, étaient réputés intrinsèquement enclins à transférer l'activité radicalaire des chaînes polymériques en croissance sur eux-mêmes (réactions de transfert sur monomère) et/ou sur des chaînes polymériques mortes (réactions de transfert sur polymère).

La présente invention a dès lors tout d'abord pour objet un procédé de polymérisation radicalaire pour la préparation de polymères halogénés qui ne présente pas les inconvénients des procédés de l'art antérieur tout en préservant leurs avantages.

A cet effet, l'invention concerne un procédé de polymérisation radicalaire pour la préparation de polymères halogénés, mettant en oeuvre
(A) un ou plusieurs monomères éthyléniquement insaturés, dont au moins un est choisi parmi les monomères halogénés,
(B) de l'iode moléculaire, et
(C) un ou plusieurs agents générateurs de radicaux choisis parmi les diazocomposés, les peroxydes et les dialkyldiphénylalcanes,
   qui comprend les étapes selon lesquelles
   (1) on introduit dans un réacteur au moins une fraction de chacun des composés (A), (B) et (C), puis
   (2) on fait réagir le contenu du réacteur, tout en y introduisant le solde éventuel de chacun des composés (A), (B) et (C).

Par polymères halogénés, on entend désigner aussi bien les homopolymères de monomères halogénés que les copolymères que forment les monomères halogénés entre eux ou avec des monomères non halogénés. Ces copolymères peuvent être notamment être des copolymères statistiques, des copolymères à blocs ou des copolymères greffés.

Par monomère halogéné, on entend désigner tout monomère éthyléniquement insaturé qui comprend au moins un atome d'halogène. A titre d'exemples de monomères halogénés, on peut citer les monomères vinyliques halogénés, les monomères styréniques halogénés comme le 4-bromostyrène, les monomères (méth)acryliques halogénés comme l'acrylate de trifluoroéthyle et les diènes conjugués halogénés comme le chloroprène.

Avantageusement au moins 50% en moles et de préférence au moins 75% en moles de (A) sont constitués par un ou plusieurs monomères éthyléniquement insaturés choisis parmi les monomères halogénés.

Les monomères halogénés sont de préférence des monomères vinyliques halogénés. Par monomères vinyliques halogénés, on entend désigner les monomères halogénés monoéthyléniquement insaturés qui sont aliphatiques et qui ont pour seul(s) hétéroatome(s) un ou plusieurs atomes d'halogène. A titre d'exemples de monomères vinyliques halogénés, on peut citer les monomères vinyliques bromés comme le bromure de vinyle, les monomères vinyliques fluorés et les monomères vinyliques chlorés.

De manière particulièrement préférée, les monomères halogénés sont choisis parmi les monomères vinyliques chlorés et les monomères vinyliques fluorés.

Par monomères vinyliques chlorés, on entend désigner les monomères chlorés monoéthyléniquement insaturés qui sont aliphatiques et qui ont pour seul(s) hétéroatome(s) un ou plusieurs atomes de chlore. A titre d'exemples de monomères vinyliques chlorés, on peut citer les monomères vinyliques chlorés dont le nombre d'atomes de chlore vaut 1, les monomères vinyliques chlorés dont le nombre d'atomes de chlore vaut 2, le trichloroéthylène, le 1,1,3-trichloropropène et le tétrachloroéthylène.

Une première famille préférée de monomères vinyliques chlorés est constituée par les monomères vinyliques chlorés dont le nombre d'atomes de chlore vaut 1. A titre d'exemples de monomères vinyliques chlorés dont le nombre d'atomes de chlore vaut 1, on peut citer le chlorure d'allyle, le chlorure de crotyle et, avec une mention toute particulière, le chlorure de vinyle.

Une seconde famille préférée de monomères vinyliques chlorés est constituée par les monomères vinyliques chlorés dont le nombre d'atomes de chlore vaut 2. A titre d'exemples de monomères vinyliques chlorés dont le nombre d'atomes de chlore vaut 2, on peut citer le 1,1-dichloropropène, le 1,3-dichloropropène, le 2,3-dichloropropène et, avec une mention toute particulière, le chlorure de vinylidène.

Par monomères vinyliques fluorés, on entend désigner les monomères fluorés monoéthyléniquement insaturés qui sont aliphatiques et qui ont pour seul(s) hétéroatome(s) un ou plusieurs atomes de fluor et, éventuellement en outre, un ou plusieurs atomes de chlore. A titre d'exemples de monomères vinyliques fluorés, on peut citer le chlorotrifluoroéthylène, le trifluoroéthylène, les monomères vinyliques perfluorés tels que le tétrafluoroéthylène et l'hexafluoropropylène, les monomères vinyliques fluorés exempts d'atomes de chlore et dont le nombre d'atomes de fluor vaut 1, ainsi que les monomères vinyliques fluorés exempts d'atomes de chlore et dont le nombre d'atomes de fluor vaut 2.

Une première famille préférée de monomères vinyliques fluorés est constituée par les monomères vinyliques fluorés exempts d'atomes de chlore et dont le nombre d'atomes de fluor vaut 1. A titre d'exemples de tels monomères, on peut citer le fluorure d'allyle et, avec une mention toute particulière, le fluorure de vinyle.

Une seconde famille préférée de monomères vinyliques fluorés est constituée par les monomères vinyliques fluorés exempts d'atomes de chlore et dont le nombre d'atomes de fluor vaut 2. A titre d'exemples de tels monomères, on peut citer le 3,3,3-trifluoropropène et, avec une mention toute particulière, le fluorure de vinylidène.

Selon une première variante préférée du procédé de polymérisation radicalaire pour la préparation de polymères halogénés selon l'invention (variante (i)), (A) est constitué par un seul monomère éthyléniquement insaturé, lequel est un monomère halogéné.

Selon la variante (i), avantageusement au moins 50% en moles de (A) et de préférence les 100% de (A) sont introduits dans le réacteur à l'étape (1).

Selon une seconde variante préférée du procédé de polymérisation radicalaire pour la préparation de polymères halogénés selon l'invention (variante (ii)), (A) est constitué par plusieurs monomères éthyléniquement insaturés, dont au moins un est choisi parmi les monomères halogénés.

Selon la variante (ii), (A) peut éventuellement en outre comprendre un ou plusieurs monomères non halogénés.

Le cas échéant, les monomères non halogénés sont de préférence choisis parmi les monomères styréniques comme le styrène, les monomères (méth)acryliques comme l'acrylate de n-butyle et le méthacrylate de méthyle, les esters vinyliques comme l'acétate de vinyle et les monomères oléfiniques comme l'éthylène, le propylène et le butadiène.

Selon la variante (ii), avantageusement au moins 25% en moles de (A) et de préférence au moins 50% en moles de (A) sont introduits dans le réacteur à l'étape (1). Avantageusement au moins 25% en moles et de préférence les 100% de la fraction de (A) introduite dans le réacteur à l'étape (1) sont constitués par un ou plusieurs monomères halogénés.

Selon la variante (ii), les polices d'introduction respectives, dans le réacteur, des différents monomères éthyléniquement insaturés constituant (A), à l'étape (1) et à l'étape (2), peuvent influencer l'ordonnancement des unités récurrentes des polymères halogénés produits par la réaction.

Selon une première sous-variante préférée de la variante (ii) (sous-variante (ii.a)), les monomères éthyléniquement insaturés constituant (A) sont introduits dans le réacteur selon la même police d'introduction.

Les polymères halogénés préparés selon la sous-variante (ii.a) sont avantageusement des copolymères statistiques.

Selon une seconde sous-variante préférée de la variante (ii) (sous-variante (ii.b)), un des monomères éthyléniquement insaturés constituant (A) est introduit dans le réacteur à l'étape (1), le ou les autres monomères éthyléniquement insaturés constituant (A) étant introduits dans le réacteur à l'étape (2), en autant de fois que le nombre de monomères éthyléniquement insaturés constituant (A) moins 1, l'un après l'autre, toute nouvelle introduction d'un monomère éthyléniquement insaturé dans le réacteur à l'étape (2) n'étant effectuée qu'après que le ou les monomères éthyléniquement insaturés préalablement introduits dans le réacteur y ai(en)t chacun réagi à concurrence d'au moins 50% en moles, de manière particulièrement préférée au moins 70% en moles et de manière tout particulièrement préférée au moins 90% en moles.

Les polymères halogénés préparés selon la sous-variante (ii.b) sont avantageusement des copolymères dont la structure moléculaire est proche, néanmoins différente, de celle que présentent des copolymères à blocs idéaux (c.-à-d. sans aucune interpénétration des blocs).

Selon une troisième sous-variante préférée de la variante (ii) (sous-variante (ii.c)), un des monomères éthyléniquement insaturés constituant (A) [monomère (M₁)] est introduit dans le réacteur à l'étape (1), la totalité ou une fraction du ou des autres monomères éthyléniquement insaturés constituant (A) [monomères (M₂)] étant introduite progressivement dans le réacteur à l'étape (2).

La fraction éventuelle du ou des monomères (M₂) qui n'a pas été introduite progressivement dans le réacteur à l'étape (2) est avantageusement introduite dans le réacteur à l'étape (1).

Selon la sous-variante (ii.c), le monomère (M₂) ou chacun des monomères (M₂), s'il y en a plusieurs, a avantageusement une réactivité supérieure à celle du monomère (M₁), c.-à-.d. que la vitesse globale à laquelle le ou chacun des monomères (M₂) est consommé par la réaction est supérieure à celle à laquelle le monomère (M₁) est consommé. Avantageusement en outre, la vitesse d'introduction dans le réacteur du monomère (M₂) ou, s'il y en a plusieurs, de chacun des monomères (M₂), est d'autant plus élevée que la réactivité de ce ou de ces monomères est élevée.

Les polymères halogénés préparés selon la sous-variante (ii.c) sont avantageusement des copolymères dont la structure moléculaire est proche de celle que présentent des copolymères homogènes idéaux (c.-à-d. dont toutes les chaînes polymériques contiennent exactement la même fraction molaire d'unités structurelles répétitives issues de chacun des monomères copolymérisés).

Dans le procédé de polymérisation radicalaire pour la préparation de polymères halogénés selon l'invention, l'iode moléculaire (B) peut être introduit dans le réacteur tel quel ou sous la forme d'un précurseur, lequel réagit dans le réacteur pour libérer de l'iode moléculaire. A titre d'exemples de tels précurseurs, on peut citer les iodures des métaux alcalins, comme l'iodure de potassium, pour autant que le réacteur comprenne une phase aqueuse à pH acide avec de l'eau oxygénée ou un peroxyde organique hydrosoluble. De préférence, (B) est introduit tel quel.

Le nombre de moles de (B) rapporté au nombre de moles de (A) vaut avantageusement au moins 2,5.10⁻⁵, de préférence au moins 5.10⁻⁵ et de manière particulièrement préférée au moins 10⁻⁴. En outre, le nombre de moles de (B) rapporté au nombre de moles de (A) vaut avantageusement au plus 10⁻¹ et de préférence au plus 10⁻².

Avantageusement au moins 50% en moles de (B), et plus avantageusement encore les 100% de (B), sont introduits dans le réacteur avant que la durée de l'étape (2) n'ait atteint 2 heures, de préférence avant que la durée de l'étape (2) n'ait atteint 1 heure et de manière particulièrement préférée à l'étape (1).

Les diazocomposés, les peroxydes et les dialkyldiphénylalcanes choisis sous (C) peuvent être usuels.

A titre d'exemples de diazocomposés, on peut citer l'acide 4,4'-azobis(4-cyanovalérique) (diazocomposé hydrosoluble) et l'azobisisobutyronitrile (diazocomposé oléosoluble).

A titre d'exemples de peroxydes, on peut citer des peroxydes hydrosolubles comme le persulfate ammonique et l'eau oxygénée,
et des peroxydes oléosolubles comme les peroxydes de dialcoyle,
les peroxydicarbonates de dialkyle et les peresters.
(C) est de préférence oléosoluble.

Le nombre de moles de (C) rapporté au nombre de moles de (B) vaut avantageusement au moins 1. En outre, il vaut avantageusement au plus 10, de préférence au plus 5.

Avantageusement au moins 50% en moles de (C), et de préférence les 100% de (C), sont introduits dans le réacteur à l'étape (1).

Dans le procédé de polymérisation radicalaire pour la préparation de polymères halogénés selon l'invention, on peut éventuellement en outre introduire dans le réacteur, à l'étape (1) et/ou à l'étape (2),
(D) un ou plusieurs complexes d'un métal, à l'étage d'oxydation 0 ou à un étage d'oxydation strictement positif, choisi parmi les métaux de transition, les lanthanides, les actinides et les métaux de la famille IIIa, et d'un ligand de ce métal.

Selon un premier mode de réalisation préféré du procédé de polymérisation radicalaire pour la préparation de polymères halogénés selon l'invention (mode de réalisation (I)), on introduit en outre dans le réacteur, à l'étape (1) et/ou à l'étape (2),
(D) un ou plusieurs complexes d'un métal, à l'étage d'oxydation 0 ou à un étage d'oxydation strictement positif, choisi parmi les métaux de transition, les lanthanides, les actinides et les métaux de la famille IIIa, et d'un ligand de ce métal.

A titre d'exemples de métaux à l'étage d'oxydation 0, on peut citer notamment Al⁽⁰⁾, Cr⁽⁰⁾, Cu⁽⁰⁾, Fe⁽⁰⁾, Mg⁽⁰⁾, Mo⁽⁰⁾, Ni⁽⁰⁾, Pb⁽⁰⁾, Pd⁽⁰⁾, Sm⁽⁰⁾, W⁽⁰⁾ et Zn⁽⁰⁾.

A titre d'exemples de métaux à un étage d'oxydation strictement positif, on peut citer notamment Ce^{(III)}, Cu^{(I)}, Cu^{(II)}. Fe^{(II)}, Fe^{(III)}, Ni^{(I)}, Rh^{(III)}, Rh^{(IV)}, Ru^{(III)}, Ru^{(IV)} et Ti^{(IV)}. Les métaux à un étage d'oxydation strictement positif sont avantageusement introduits sous forme de sels, par exemple sous forme de chlorures, de bromures, d'iodures ou de tellurures.

Les métaux préférés sont Cu⁽⁰⁾, Cu^{(I)}, Cu^{(II)} et Ti^{(IV)}.

A titre d'exemples de ligands des métaux susmentionnés, on peut citer notamment des ligands aminés comme la bipyridine (Bpy) et la 1,1,4,7,10,10-hexaméthyltriéthylènetétramine, des ligands phosphorés comme la triphénylphosphine (P(Ph)₃) et d'autres ligands comme l'indényle, le cyclopentadiényle (Cp), la tris[2-aminoéthyl]amine (TREN), la tris[2-(diméthylamino)éthyl]amine (Me6TREN) et les anions acétylacétonate et butanolate (OBu)⁻ où Bu désigne un groupement n-butyle.

Les ligands préférés sont (OBu)⁻, le Cp, la Bpy, le TREN et le Me6TREN.

A titre d'exemples de complexes, on peut citer notamment Cu⁽⁰⁾/Bpy, Cu^{(I)}Cl/Bpy, Cu^{(I)}Br/Bpy, Cu^{(I)}I/Bpy, Cu^{(I)}Cl/TREN, Cu^{(I)}Cl/Me6TREN, Cu^{(II)}Te/Bpy, Ti^{(IV)}Cp₂Cl₂ et Ti^{(IV)}(OBu)₄. Les complexes cités ci-avant ont donné de très bons résultats.

Selon le mode de réalisation (I), le nombre de moles de (D) rapporté au nombre de moles de (B) vaut avantageusement au moins 10⁻², de préférence au moins 10⁻¹. En outre, il vaut avantageusement au plus 10², de préférence au plus 10¹.

Selon le mode de réalisation (I), le nombre de moles de (C) rapporté au nombre de moles de (B) vaut avantageusement au plus 1,4 et de préférence au plus 1,2.

Selon un second mode de réalisation préféré du procédé de polymérisation radicalaire pour la préparation de polymères halogénés selon l'invention (mode de réalisation (II)), le contenu du réacteur, à l'étape (1) et à l'étape (2), est exempt de complexe d'un métal, à l'étage d'oxydation 0 ou à un étage d'oxydation strictement positif, choisi parmi les métaux de transition, les lanthanides, les actinides et les métaux de la famille IIIa, et d'un ligand de ce métal.

Selon le mode de réalisation (II), le nombre de moles de (C) rapporté au nombre de moles de (B) vaut avantageusement au moins 1,2 et de préférence au moins 1,4.

Le procédé de polymérisation radicalaire pour la préparation de polymères halogénés selon l'invention peut être notamment un procédé de polymérisation en solution, en solution-masse, en masse, en suspension, en microsuspension ou en émulsion. Ainsi, dans le procédé de polymérisation radicalaire pour la préparation de polymères halogénés selon l'invention, on peut éventuellement introduire dans le réacteur, à l'étape (1) et/ou à l'étape (2), outre (A), (B), (C) et éventuellement (D), jusqu'à 1000% en poids rapporté au poids de (A), d'un ou plusieurs ingrédients usuellement mis en oeuvre pour polymériser les monomères halogénés, tels que l'eau, le CO₂ supercritique, les liquides de dispersion organiques comme l'isopropanol, les solvants organiques comme le benzène, le tétrahydrofurane et la cyclohexanone, les agents de dispersion comme les alcools polyvinyliques, les agents émulsionnants comme le myristate ammonique (ingrédients (U)).

Pour faire réagir le contenu du réacteur selon l'étape (2), on met en oeuvre des moyens par lesquels des radicaux sont générés en son sein. A cet effet, on peut notamment chauffer celui-ci ou l'exposer à une radiation lumineuse intense.

La température à laquelle on fait réagir le contenu du réacteur vaut avantageusement au moins 30°C et de préférence au moins 40°C. En outre, elle vaut avantageusement au plus 200°C et de préférence au plus 120°C.

Avantageusement, on procède à l'étape (2) jusqu'à ce que le ou les monomères halogénés, d'une part, et le ou les éventuels monomères non halogénés, d'autre part, aient réagi dans certaines limites.

Ainsi, d'une part, on procède à l'étape (2) jusqu'à ce qu'aient réagi de préférence au moins 10% en moles du ou des monomères halogénés introduits dans le réacteur. En outre, on procède à l'étape (2) jusqu'à ce qu'aient réagi (i) de préférence au plus 70% en moles et de manière particulièrement préférée au plus 35% en moles du ou des monomères halogénés introduits dans le réacteur, si le ou les monomères éthyléniquement insaturés introduits dans le réacteur sont exclusivement des monomères vinyliques chlorés, (ii) de préférence au plus 85% en moles et de manière particulièrement préférée au plus 70% en moles du ou des monomères halogénés introduits dans le réacteur, si le ou les monomères éthyléniquement insaturés introduits dans le réacteur sont exclusivement des monomères halogénés autres que les monomères vinyliques chlorés, et (iii) de préférence au plus 95% en moles du ou des monomères halogénés introduits dans le réacteur, si au moins un monomère éthyléniquement insaturé introduit dans le réacteur est un monomère non halogéné.

D'autre part, on procède à l'étape (2) jusqu'à ce qu'aient réagi de préférence au moins 50% en moles du ou des éventuels monomères non halogénés introduits dans le réacteur. En outre, on procède à l'étape (2) jusqu'à ce qu'aient réagi de préférence au plus 95% en moles du ou des éventuels monomères non halogénés introduits dans le réacteur.

Pour mettre fin à l'étape (2), on peut par exemple refroidir le contenu du réacteur et/ou y introduire un agent inhibiteur puissant et/ou en extraire la fraction de (A) qui n'a pas réagi, ces opérations pouvant être réalisées simultanément ou successivement, dans le réacteur ou en dehors de celui-ci.

De préférence, on met fin à l'étape (2) en extrayant du contenu du réacteur la fraction de (A) qui n'a pas réagi (traitement de démonomérisation), éventuellement après avoir refroidi le contenu du réacteur et/ou y avoir introduit un agent inhibiteur puissant.

Lorsque la fraction de (A) qui n'a pas réagi a une volatilité suffisante, on l'extraira avantageusement du contenu du réacteur en tirant celui-ci sous vide.

Le procédé de polymérisation radicalaire pour la préparation de polymères halogénés selon l'invention peut éventuellement en outre comprendre une étape, postérieure aux étapes précédentes, selon laquelle on isole le polymère halogéné du contenu du réacteur (étape (3)).

Pour isoler le polymère halogéné du contenu du réacteur, on peut mettre en oeuvre, outre le traitement de démonomérisation déjà discuté ci-avant, toutes les techniques de séparation connues de l'homme du métier, notamment la précipitation (en particulier lorsque le polymère halogéné a été produit par un procédé en solution ou solution-masse), l'essorage et le séchage en lit fluidisé (en particulier lorsque le polymère halogéné a été produit par un procédé en suspension) et le séchage par atomisation ou par coagulation (en particulier lorsque le polymère halogéné a été produit par un procédé en émulsion ou en microsuspension). Ces opérations sont avantageusement réalisées en dehors du réacteur.

Le procédé de polymérisation radicalaire pour la préparation de polymères halogénés selon l'invention est avantageusement mis en oeuvre pour préparer les polymères halogénés selon l'invention.

Ensuite, la présente invention a pour objet un procédé de polymérisation radicalaire pour la préparation de copolymères à blocs dont au moins un bloc est un bloc de polymère halogéné.

A cet effet, l'invention concerne un procédé de polymérisation radicalaire pour la préparation de copolymères à blocs dont au moins un bloc est un bloc de polymère halogéné, mettant en oeuvre
(A') un ou plusieurs monomères éthyléniquement insaturés, et
(B') un ou plusieurs polymères halogénés choisis parmi les polymères préparés par le procédé tel que décrit précédemment et parmi ceux préparés au cours d'une étape préalable par le procédé ici concerné,
   qui comprend les étapes selon lesquelles
   (1') on introduit dans un réacteur au moins une fraction de (A') et au moins une fraction de (B'), puis
   (2') on fait réagir le contenu du réacteur, tout en y introduisant le solde éventuel de (A') et le solde éventuel de (B').

Le procédé de polymérisation radicalaire pour la préparation de copolymères à blocs selon l'invention répond aux mêmes caractéristiques et préférences que celles décrites précédemment concernant le procédé de polymérisation radicalaire pour la préparation de polymères halogénés, sauf contre-indication ou à moins qu'il en soit précisé autrement.

Le nombre de monomères éthyléniquement insaturés constituant (A') peut être quelconque. De préférence, il vaut au plus 2.

Le ou les monomères éthyléniquement insaturés constituant (A') peuvent être indifféremment choisis parmi les monomères halogénés et les monomères non halogénés.
(B') peut être introduit dans le réacteur sous quelque forme que ce soit, notamment sous la forme d'une poudre, d'une dispersion, d'une émulsion ou d'une solution, et après avoir été isolé ou non du contenu du réacteur dans lequel il a été préalablement préparé. (B') est introduit dans le réacteur de préférence après avoir été isolé du contenu du réacteur dans lequel il a été préalablement préparé.

Le nombre de polymères halogénés constituant (B') vaut de préférence 1.

De préférence, la totalité de (B') est introduite dans le réacteur à l'étape (1').

Le poids de (B') rapporté au poids de (A') vaut avantageusement au moins 0,1 et de préférence au moins 0,5. En outre, il vaut avantageusement au plus 4.

Dans le procédé de polymérisation radicalaire selon l'invention, on introduit avantageusement en outre dans le réacteur, à l'étape (1') et/ou à l'étape (2'), (C') un ou plusieurs agents générateurs de radicaux choisis parmi les peroxydes, les diazocomposés et les dialkyldiphénylalcanes.
(C') répond aux mêmes caractéristiques et aux mêmes préférences que (C), et ce à quelque degré de préférence que ce soit.

Dans le procédé de polymérisation radicalaire pour la préparation de copolymères à blocs selon l'invention, on peut éventuellement en outre introduire dans le réacteur, à l'étape (1') et/ou à l'étape (2'), (D') un ou plusieurs complexes d'un métal, à l'étage d'oxydation 0 ou à un étage d'oxydation strictement positif, choisi parmi les métaux de transition, les lanthanides, les actinides et les métaux de la famille IIIa, et d'un ligand de ce métal.
(D') répond aux mêmes caractéristiques et aux mêmes préférences que (D), et ce à quelque degré de préférence que ce soit.

Le procédé de polymérisation radicalaire pour la préparation de copolymères à blocs selon l'invention est avantageusement mis en oeuvre pour préparer les copolymères à blocs selon l'invention.

Ensuite, la présente invention a pour objet des polymères halogénés qui ne présentent pas les inconvénients des polymères halogénés de l'art antérieur tout en préservant leurs avantages et qui peuvent notamment être obtenus par le procédé de polymérisation radicalaire pour la préparation de polymères halogénés décrit précédemment.

A cet effet, l'invention concerne des polymères halogénés qui ont une masse moléculaire moyenne en nombre Mₙ supérieure à 1,0.10⁴ et un rapport M_{z}/M_{w} inférieur à 1,65.

La distribution des masses moléculaires des polymères halogénés selon l'invention est habituellement déterminée par chromatographie d'exclusion stérique, comme explicité à l'exemple 1 du présent document.

A partir de la distribution des masses moléculaires ainsi obtenue, on peut calculer notamment :
- la masse moléculaire moyenne en nombre Mₙ = ∑ Nᵢ Mᵢ / ∑ Nᵢ, où Nᵢ est le nombre de moles de polymère de masse moléculaire Mᵢ,
- la masse moléculaire moyenne en poids M_{w} = ∑ Nᵢ Mᵢ²/ ∑ Nᵢ Mᵢ,
- la masse moléculaire moyenne d'ordre supérieur M_{z} = ∑ Nᵢ Mᵢ³ / ∑ Nᵢ Mᵢ²,
- l'indice de polydispersité M_{w}/Mₙ,
- le rapport M_{z}/M_{w}.

Les polymères halogénés selon l'invention ont une masse moléculaire moyenne en nombre Mₙ de préférence supérieure à 1,4.10⁴, de manière particulièrement préférée supérieure à 1,8.10⁴.

Les polymères halogénés selon l'invention ont un rapport M_{z}/M_{w} de préférence inférieur à 1,60.

En outre, les polymères halogénés selon l'invention ont un indice de polydispersité M_{w}/Mₙ avantageusement inférieur à 2,00.

Les polymères halogénés selon l'invention peuvent tout aussi bien être des homopolymères de monomères halogénés que des copolymères formés par des monomères halogénés entre eux ou avec des monomères non halogénés. Ils sont de préférence formés par au moins 50% en moles, de manière particulièrement préférée par au moins 80% en moles et de manière tout particulièrement préférée par 100% de monomères halogénés.

En outre, ils sont de préférence des polymères de monomères vinyliques halogénés. De manière particulièrement préférée, ils sont choisis parmi les polymères de monomères vinyliques chlorés et les polymères de monomères vinyliques fluorés.

A titre d'exemples de polymères de monomères vinyliques chlorés, on peut citer les polymères de monomères vinyliques chlorés dont le nombre d'atomes de chlore vaut 1, les polymères de monomères vinyliques chlorés dont le nombre d'atomes de chlore vaut 2, les polymères du trichloroéthylène, les polymères du 1,1,3-trichloropropène et les polymères du tétrachloroéthylène.

Une première famille préférée de polymères de monomères vinyliques chlorés est constituée par les polymères de monomères vinyliques chlorés dont le nombre d'atomes de chlore vaut 1. A titre d'exemples de tels polymères, on peut citer les polymères du chlorure d'allyle, les polymères du chlorure de crotyle et, avec une mention toute particulière, les polymères du chlorure de vinyle.

Les polymères du chlorure de vinyle préférés ont un indice de polydispersité M_{w}/Mₙ avantageusement inférieur à 1,60, de préférence inférieur à 1,50 et de manière particulièrement préférée inférieur à 1,45. En outre, ils ont un rapport M_{z}/M_{w} de préférence inférieur à 1,50.

Une seconde famille préférée de polymères de monomères vinyliques chlorés est constituée par les polymères de monomères vinyliques chlorés dont le nombre d'atomes de chlore vaut 2. A titre d'exemples de tels polymères, on peut citer les polymères du 1,1-dichloropropène, du 1,3-dichloropropène, du 2,3-dichloropropène et, avec une mention toute particulière, les polymères du chlorure de vinylidène.

A titre d'exemples de polymères de monomères vinyliques fluorés, on peut citer les polymères du chlorotrifluoroéthylène, les polymères du trifluoroéthylène, les polymères de monomères vinyliques perfluorés comme les polymères du tétrafluoroéthylène et les polymères de l'hexafluoropropylène, les polymères de monomères vinyliques fluorés exempts d'atomes de chlore et dont le nombre d'atomes de fluor vaut 1, ainsi que les polymères de monomères vinyliques fluorés exempts d'atomes de chlore et dont le nombre d'atomes de fluor vaut 2.

Une première famille préférée de polymères de monomères vinyliques fluorés est constituée par les polymères de monomères vinyliques fluorés exempts d'atomes de chlore et dont le nombre d'atomes de fluor vaut 1. A titre d'exemples de tels polymères, on peut citer les polymères du fluorure d'allyle, et, avec une mention toute particulière, les polymères du fluorure de vinyle.

Une seconde famille préférée de polymères de monomères vinyliques fluorés est constituée par les polymères de monomères vinyliques fluorés exempts d'atomes de chlore et dont le nombre d'atomes de fluor vaut 2. A titre d'exemples de tels polymères, on peut citer les polymères du 3,3,3-trifluoropropène et, avec une mention toute particulière, les polymères du fluorure de vinylidène.

Les polymères du fluorure de vinylidène préférés ont un indice de polydispersité M_{w}/Mₙ avantageusement inférieur à 1,85, de préférence inférieur à 1,75.

Les polymères halogénés selon l'invention peuvent être sous la forme de liquides ou de poudres. De préférence, ils sont sous la forme de poudres.

Les polymères halogénés selon l'invention ont une blancheur mesurée au chromamètre MINOLTA^{®} CR 200 valant avantageusement au moins 80%, de préférence au moins 85%. La mesure au chromamètre MINOLTA^{®} CR 200 de la blancheur des polymères halogénés selon l'invention est effectuée comme explicité à l'exemple 1 du présent document.

Ensuite, la présente invention a dès lors enfin pour objet des copolymères à blocs dont au moins un bloc est un bloc de polymère halogéné qui présentent de nombreux avantages et qui peuvent notamment être obtenus par le procédé de polymérisation radicalaire pour la préparation de copolymères à blocs décrit précédemment.

A cet effet, l'invention concerne des copolymères à blocs dont au moins un bloc est un bloc de polymère halogéné identique aux polymères halogénés décrits ci-avant (copolymères à blocs (CB₁)).

Elle concerne également des copolymères à bloc dont au moins un bloc est un bloc de polymère halogéné, qui ont une masse moléculaire moyenne en nombre Mₙ supérieure à 1,5.10⁴ et un indice de polydispersité M_{w}/Mₙ inférieur à 1,60 (copolymères à blocs (CB₂)).

Tant pour les copolymères à blocs (CB₁) que pour les copolymères à bloc (CB₂) selon la présente invention, le poids du ou des blocs de polymère halogéné vaut avantageusement au moins ¹/₁₀, de préférence au moins ⅓ du poids des copolymères à blocs selon l'invention. En outre, il vaut avantageusement au plus les ⁴/₅ du poids des copolymères à blocs (CB₁) et (CB₂) selon l'invention.

Les copolymères à blocs (CB₁) et (CB₂) selon l'invention peuvent éventuellement comprendre un ou plusieurs blocs de polymère non halogéné. A titres d'exemples de tels blocs, on peut citer les blocs homopolymères du styrène et les blocs copolymères statistiques du styrène et de l'acrylonitrile. De préférence, le ou les blocs de polymère non halogéné sont des blocs homopolymères.

A titre d'exemples de copolymères à blocs selon l'invention, on peut citer le copolymère dibloc composé d'un bloc d'un copolymère statistique du chlorure de vinylidène et de l'acrylate de méthyle et d'un bloc d'un homopolymère du styrène tel que fabriqué selon l'exemple 7 du présent document.

Ensuite, la présente invention a pour objet des articles en polymère halogéné qui ne présentent pas les inconvénients des articles en polymère halogéné de l'art antérieur, tout en préservant leurs avantages.

A cet effet, l'invention concerne des articles fabriqués en utilisant un ou plusieurs polymères choisis parmi les polymères préparés par les procédés tels que décrits précédemment et les polymères tels que décrits précédemment.

A titres d'exemples de tels articles, on peut citer notamment les couches compactes, les films, les feuilles, les plaques et les profilés, les tubes et les tuyaux, les mastics et les couches cellulaires.

Ces articles sont habituellement fabriqués de manière conventionnelle, en appliquant les techniques de mise en oeuvre connues, comme le calandrage, l'extrusion, l'injection, l'enduction, le pistolage, le trempage et le moulage.

Les procédés de polymérisation radicalaire selon l'invention présentent de multiples avantages.

Ils ont un caractère vivant bien affirmé, quoique mettant en oeuvre des monomères halogénés comme le chlorure de vinyle, le chlorure de vinylidène, le fluorure de vinyle et le fluorure de vinylidène, réputés intrinsèquement enclins à transférer l'activité radicalaire des chaînes polymériques en croissance sur eux-mêmes (réactions de transfert sur monomère) et/ou sur des chaînes polymériques mortes (réactions de transfert sur polymère).

De manière surprenante, dans les procédés de polymérisation radicalaire selon l'invention, un nombre important de chaînes polymériques (re)naissent au début de la polymérisation et croissent tout au long de celle-ci, sans interruption ou arrêt par des réactions parasites de transfert et/ou de disproportionnement et/ou de recombinaison ; les procédés selon l'invention se différencient ainsi quant à leur mécanisme réactionnel des procédés de polymérisation radicalaire connus.

D'un point de vue macroscopique, ceci se traduit par le fait que les procédés de polymérisation radicalaire selon l'invention sont tels qu'en cours de réaction, la masse moléculaire moyenne en nombre (ou en poids) des polymères augmente continûment lorsque la fraction de monomère halogéné qui a réagi augmente, alors qu'elle reste quasiment constante tout au long d'une polymérisation radicalaire « classique ».

Un autre avantage des procédés de polymérisation radicalaire selon l'invention, lié au précédent, est que la croissance des chaînes polymériques des polymères halogénés préparés par ces procédés peut être redémarrée en faisant à nouveau réagir les polymères, même après avoir été isolés de leur milieu de polymérisation, avec des monomères éthyléniquement insaturés, identiques ou différents de ceux qui avaient été polymérisés préalablement. On peut de la sorte préparer des copolymères à blocs comprenant au moins un bloc de polymère halogéné. Au contraire, selon le procédé de polymérisation radicalaire « classique », il n'est habituellement pas possible de synthétiser de tels copolymères.

Un dernier avantage des procédés de polymérisation radicalaire selon l'invention est qu'ils ne nécessitent pas de mettre en oeuvre des matières premières habituellement coûteuses comme des agents de transfert organiques iodés.

Les polymères selon l'invention conservent toutes les propriétés caractéristiques avantageuses des polymères halogénés de l'art antérieur, notamment une résistance chimique élevée aux alcalis et aux alcools, ainsi qu'une résistance élevée au feu.

Ils ont un indice de polydispersité M_{w}/Mₙ et un rapport M_{z}/M_{w} sensiblement réduits par rapport aux polymères de l'art antérieur.

Ils présentent en outre un certain nombre d'autres avantages en relation avec leur faible indice de polydispersité. Le principal est que les nombreuses propriétés de ces polymères dépendant de la masse moléculaire présentent à l'échelle moléculaire une homogénéité améliorée par rapport aux polymères halogénés de l'art antérieur.

De par le fait qu'ils sont exempts de chaînes polymériques de très faible masse moléculaire, les polymères halogénés selon l'invention ont une stabilité thermique supérieure à celle des polymères halogénés de l'art antérieur ; de plus, les articles fabriqués au départ de ceux-ci ont des propriétés mécaniques, en particulier la résistance à la rupture, à l'abrasion et à la griffe, supérieures à celles des articles fabriqués au départ des polymères halogénés de l'art antérieur.

De par le fait qu'ils sont exempts de chaînes polymériques de masse moléculaire très élevée, les polymères halogénés selon l'invention se mettent en oeuvre à l'état fondu plus aisément que les polymères halogénés de l'art antérieur ; pour la même raison, les articles plastifiés fabriqués au départ de ceux-ci sont mieux gélifiés et ont ainsi des propriétés mécaniques, une transparence et un fini de surface supérieurs à ceux des articles fabriqués au départ des polymères halogénés de l'art antérieur.

Les exemples qui suivent sont destinés à illustrer l'invention sans pour autant en limiter la portée.

### Exemple 1 (selon l'invention)

Dans un réacteur de 3,51 équipé d'un agitateur et d'une double enveloppe, on a introduit tout d'abord 2000 g d'eau déminéralisée, 6 g d'alcool polyvinylique (agent dispersant), 1,5 g d'iode moléculaire et 1,5 g de peroxydicarbonate de diéthyle (agent générateur de radicaux). On a fermé le réacteur puis on a mis l'agitateur en marche. On a effectué un vide dans le réacteur.

On a introduit 1000 g de chlorure de vinyle dans le réacteur.

On a porté le contenu du réacteur à 60°C. Soit tₒ le moment auquel la température du contenu du réacteur a atteint 60°C. On a laissé réagir.

A tₒ + 3 h 30, on a arrêté la réaction en refroidissant le plus rapidement possible le contenu du réacteur (slurry) jusqu'à la température ambiante.

On a épuré le slurry en le chlorure de vinyle non converti. On en a ensuite éliminé l'eau par essorage et séchage en lit fluidisé. On a ainsi obtenu une poudre de polychlorure de vinyle.

On a calculé la fraction de chlorure de vinyle qui a réagi (taux de conversion (f)), exprimé en %, à partir de la teneur en matières sèches du slurry, elle-même déterminée par gravimétrie.

On a déterminé le nombre K du polychlorure de vinyle selon norme ISO 1628-2.

On a également déterminé la distribution des masses moléculaires du polychlorure de vinyle par chromatographie d'exclusion stérique et la blancheur du polychlorure de vinyle au moyen d'un chromamètre Minoltat CR^{®} 200, comme explicité ci-après.

Détermination de la distribution des masses moléculaires d'un polymère.

On a déterminé la distribution des masses moléculaires du polymère au moyen d'un chromatographe WATERS^{®} Alliance 2692 équipé d'un détecteur Shodex RI modèle 2410, de colonnes WATERS^{®} Styragel HR4, HR3 et HR2 en série, en utilisant le diméthylformamide additionné de LiBr comme diluant à une concentration de 0,1 mole/litre, à un débit de 1 ml/min et une température de 40°C. Le chromatographe avait été préalablement étalonné au moyen d'étalons de polyméthacrylate de méthyle, les facteurs de Mark-Houwink étant α = 0,770 et k = 9,45.10⁻⁵.

### Détermination de la blancheur d'un polymère.

On a mis sous tension un chromamètre Minoltat CR^{®} 200 équipé d'une lampe à arc au xénon et on a laissé stabilisé l'appareil. On a configuré celui-ci en mode couleurs, multi-mesures, canal double 0, avec la source C comme illuminant. On a ensuite calibré le canal double 0 au moyen d'une plaque étalon en oxyde d'aluminium. On a versé le polymère dans un godet de mesure prévu à cet effet jusqu'à léger débordement, puis on a posé sur lui une plaque de verre MATOBEL^{®} et on a comprimé légèrement de sorte que la plaque entre en contact avec le bord du godet. On a ensuite placé la tête de mesure du chromamètre sur la plaque et on a effectué consécutivement 3 mesures (3 flashes lumineux) des coordonnées Y, x, y de l'espace CIELAB 1931. On en a fait la moyenne puis on a calculé la composante trichromatique Z = x • Y²/y² - Y et la blancheur de la résine B = a • Z - b, a valant 0,9 et b valant 1,085, a et b étant des coefficients empiriques déterminés au préalable par voie expérimentale de manière à aligner les résultats obtenus selon la présente technique de mesure sur ceux obtenus au moyen d'un réflectomètre Photovolt^{®} modèle 670.

### Exemple 2 (selon l'invention)

On a procédé comme à l'exemple 1 hormis qu'on a arrêté la réaction à tₒ + 4 h (au lieu de tₒ + 3 h 30).

### Exemple 3 (selon l'invention)

On a procédé comme à l'exemple 1 hormis qu'on a arrêté la réaction à tₒ + 5 h (au lieu de tₒ+ 3 h 30).

Les résultats des différentes mesures des exemples 1 à 3 sont présentés dans le tableau 1.

**Tableau 1**

| Exemple | f | Kw | Mn | M_{w} | M_{z} | M_{w}/Mₙ | M_{z}/M_{w} | B |
|---|---|---|---|---|---|---|---|---|
| | (%) | | (.10⁴) | (.10⁴) | (.10⁴) | | | (%) |
| 1 | 10 | n.m. | 2,0 | 2,6 | 3,5 | 1,30 | 1,35 | n.m. |
| 2 | 22 | 43,1 | 2,0 | 2,8 | 3,9 | 1,40 | 1,39 | 85,0 |
| 3 | 33 | 44,8 | 2,4 | 3,4 | 4,8 | 1,42 | 1,41 | 87,3 |

| | | | | | | | | |
|---|---|---|---|---|---|---|---|---|
| n.m. = non mesuré. | | | | | | | | |

### Exemple 4 (exemple comparatif)

On a déterminé la distribution des masses moléculaires d'homopolymères du chlorure de vinyle commerciaux au moyen d'un chromatographe WATERS^{®} Alliance 2692, exactement dans les mêmes conditions que celles appliquées dans les exemples 1 à 3.

Les résultats des mesures de l'exemple 4 sont présentés dans le tableau 2.

**Tableau 2**

| Résine | Kw | Mₙ | M_{w}, | M_{z} | M_{w}/Mₙ | M_{z}/M_{w}. |
|---|---|---|---|---|---|---|
| | | (.10⁴) | (.10⁴) | (.10⁴) | | |
| PVC SOLVIN^{®} 266RC | 66,0 | 4,8 | 9,6 | 16,2 | 2,00 | 1,69 |
| PVC SOLVIN^{®} 275PC | 74,8 | 6,1 | 12,6 | 21,3 | 2,07 | 1,69 |

### Exemple 5 (selon l'invention)

Dans un réacteur de 4 litres, muni d'une double enveloppe et d'un agitateur de type turbine tournant à 880 tours/minute, on a introduit successivement 2429 g d'eau déminéralisée, un agent dispersant méthylhydroxypropylcellulose à raison de 0,04 g par 100 g de monomère et 4,1 g (0,016 mole) d'iode moléculaire. On a fait le vide. On a introduit 13,4 g de perpivalate de tert-amyle. Après avoir attendu 5 minutes, on a successivement chargé dans le réacteur 609 g (4.06 moles) d'hexafluoropropylène et 644 g (10,06 moles) de fluorure de vinylidène. On a progressivement chauffé le contenu du réacteur jusqu'à ce que celui-ci ait atteint la température palier de 60°C. On a injecté progressivement 614 g (9,59 moles) de fluorure de vinylidène dans le réacteur, de manière à y maintenir la pression constante, à la valeur de 120 bars. Ensuite, on a laissé chuté progressivement la pression dans le réacteur, jusqu'à ce que celle-ci ait atteint 100 bars. On a alors chauffé le contenu du réacteur à 65 °C. Lorsque la pression dans le réacteur a atteint 60 bars, soit 597 min après avoir atteint la température palier de 60°C, on a dégazé la suspension aqueuse (en abaissant la pression jusqu'à la pression atmosphérique). On a ensuite recueilli le copolymère par filtration puis on l'a remis en suspension en eau propre dans une cuve avec agitation. Après un cycle de lavage, on a séché le polymère en étuve jusqu'à poids constant.

On a déterminé la fraction pondérale d'hexafluoropropylène et de fluorure de vinylidène qui a été consommée globalement par la réaction : celle-ci a été de 67 %.

On a par ailleurs déterminé la distribution des masses moléculaires du copolymère ainsi préparé au moyen d'un chromatographe WATERS^{®} Alliance 2692, exactement dans les mêmes conditions que celles appliquées dans les exemples 1 à 3. On a obtenu :
Mn = 7,7.10⁴ M_{w} = 13,0.10⁴, M_{z} = 20,6.10⁴, M_{w}/Mₙ = 1,69 et M_{z}/M_{w}=1,58

### Exemple 6 (exemple comparatif)

On a procédé comme à l'exemple 5 hormis que l'on n'a pas introduit d'iode dans le réacteur.

La pression dans le réacteur a atteint 60 bars 261 min après avoir atteint la température palier de 60°C.

On a déterminé la fraction pondérale d'hexafluoropropylène et de fluorure de vinylidène qui a été consommée globalement par la réaction : celle-ci a été de 73 %.

On a par ailleurs déterminé la distribution des masses moléculaires du copolymère ainsi préparé au moyen d'un chromatographe WATERS^{®} Alliance 2692, exactement dans les mêmes conditions que celles appliquées dans l'exemple 5. On a obtenu :
Mn = 9,5.10⁴ M_{w} = 20,9.10⁴, M_{z} = 41,4.10⁴, M_{w}/Mₙ = 2,20 et M_{z}/M_{w}=1,98

### Exemple 7 (selon l'invention)

Dans un réacteur en verre de 300 ml, on a fait le vide. On y a ensuite introduit une première solution composée de 64,8 g de chlorure de vinylidène, 14,4 g d'acrylate de méthyle, 1,006 g d'iode moléculaire et 88 g de benzène, puis une seconde solution composée de 0,975 g d'azobisisobutyronitrile et 10 g de benzène.

Immédiatement après avoir introduit la seconde solution dans le réacteur, on a placé celui-ci dans un bain thermostatisé à 70°C. Soit tₒ le moment auquel la température du contenu du réacteur a atteint 70°C. On a laissé réagir.

A tₒ + 30 heures, on a arrêté la réaction en refroidissant le plus rapidement possible le contenu du réacteur jusqu'à la température ambiante (solution intermédiaire (S1)).

(S1) comprenait essentiellement un copolymère du chlorure de vinylidène et de l'acrylate de méthyle (polymère intermédiaire (P1)) ainsi que du chlorure de vinylidène et de l'acrylate de méthyle non convertis, en solution dans du benzène.

On a précipité le polymère (P1) compris dans la solution intermédiaire (S1) dans du méthanol pendant 72 heures environ puis on a filtré et séché en étuve sous vide (polymère intermédiaire (P'1)).

Dans un réacteur en verre de 25 ml, on a introduit 6,01 g de styrène et 2,43 g de polymère (P'1). On a fait le vide.

On a ensuite placé le réacteur dans un bain thermostatisé à 110°C. Soit t₁ le moment auquel la température du contenu du réacteur a atteint 110°C. On a laissé réagir.

A t₁ + 5 h 45, on a arrêté la réaction en refroidissant le plus rapidement possible le contenu du réacteur jusqu'à la température ambiante (solution-masse finale (S2)).

(S2) comprenait essentiellement un copolymère à blocs comprenant un bloc d'un copolymère du chlorure de vinylidène et de l'acrylate de méthyle et un bloc de polystyrène (copolymère à blocs (P2)), ainsi que du styrène non converti.

Au départ d'un échantillon de (S2), on a déterminé la distribution des masses moléculaires du copolymère à blocs (P2) par chromatographie d'exclusion stérique.

On a obtenu les résultats suivants concernant la distribution des masses moléculaires de (P2) : Mₙ = 2,0.10⁴, M_{z} = 4,3.10⁴ et M_{w}/Mₙ = 1,58.

## Revendications

1. - Procédé de polymérisation radicalaire pour la préparation de copolymères à blocs dont au moins un bloc est un bloc de polymère de monomère(s) vinylique(s) fluoré(s), mettant en oeuvre
(A') un ou plusieurs monomères éthyléniquement insaturés, et
(B') un ou plusieurs polymères de monomère(s) vinylique(s) fluoré(s) qui comprend les étapes selon lesquelles
(1') on introduit dans un réacteur au moins une fraction de (A') et au moins une fraction de (B'), puis
(2') on fait réagir le contenu du réacteur, tout en y introduisant le solde éventuel de (A') et le solde éventuel de (B');
le ou les polymères de monomère(s) vinylique(s) fluoré(s) (B') étant choisis
- parmi les polymères préparés par un procédé de polymérisation radicalaire pour la préparation de polymères de monomère(s) vinylique(s) fluoré(s), mettant en oeuvre
(A) un ou plusieurs monomères éthyléniquement insaturés, dont au moins un est choisi parmi les monomères vinyliques fluorés,
(B) de l'iode moléculaire, et
(C) un ou plusieurs agents générateurs de radicaux choisis parmi les diazocomposés, les peroxydes et les dialkyldiphénylalcanes,
qui comprend les étapes selon lesquelles
(1) on introduit dans un réacteur au moins une fraction de chacun des composés (A), (B) et (C), puis
(2) on fait réagir le contenu du réacteur, tout en y introduisant le solde éventuel de chacun des composés (A), (B) et (C), puis on met fin à l'étape (2); et
- parmi les polymères préparés au cours d'une étape préalable par le procédé ici revendiqué selon la présente revendication 1.

2. -Procédé selon la revendication 1, **caractérisé en ce qu'**au moins 50% en moles de (A) sont constitués par un ou plusieurs monomères éthyléniquement insaturés choisis parmi les monomères vinyliques fluorés.

3. - Procédé selon la revendication 1 ou 2, **caractérisé en ce que** le ou un des monomères éthyléniquement insaturés est le fluorure de vinylidène.

4. - Procédé selon la revendication 1, **caractérisé en ce que** (A) est constitué par un seul monomère éthyléniquement insaturé, lequel est un monomère vinylique fluoré, au moins 50% en moles de (A) étant introduits dans le réacteur à l'étape (1).

5. - Procédé selon la revendication 1, **caractérisé en ce que** (A) est constitué par plusieurs monomères éthyléniquement insaturés, les monomères éthyléniquement insaturés constituant (A) étant introduits dans le réacteur selon la même police d'introduction.

6. - Procédé selon la revendication 1, **caractérisé en ce que** (A) est constitué par plusieurs monomères éthyléniquement insaturés, un des monomères éthyléniquement insaturés constituant (A) étant introduit dans le réacteur à l'étape (1), le ou les autres monomères éthyléniquement insaturés constituant (A) étant introduits dans le réacteur à l'étape (2), en autant de fois que le nombre de monomères éthyléniquement insaturés constituant (A) moins 1, l'un après l'autre, toute nouvelle introduction d'un monomère éthyléniquement insaturé dans le réacteur à l'étape (2) n'étant effectuée qu'après que le ou les monomères éthyléniquement insaturés préalablement introduits dans le réacteur y ai(en)t chacun réagi à concurrence d'au moins 50% en moles.

7. - Procédé selon la revendication 1, **caractérisé en ce que** (A) est constitué par plusieurs monomères éthyléniquement insaturés, un des monomères éthyléniquement insaturés constituant (A) étant introduit dans le réacteur à l'étape (1), la totalité ou une fraction du ou des autres monomères éthyléniquement insaturés constituant (A) étant introduite progressivement dans le réacteur à l'étape (2).

8. - Procédé selon l'une quelconque des revendications 1 à 7, **caractérisé en ce que** le nombre de moles de (B) rapporté au nombre de moles de (A) vaut au moins 2,5.10⁻⁵.

9. - Procédé selon l'une quelconque des revendications 1 à 8, **caractérisé en ce qu'**au moins 50% en moles de (B) sont introduits dans le réacteur à l'étape (1).

10. - Procédé selon l'une quelconque des revendications 1 à 9, **caractérisé en ce que** le nombre de moles de (C) rapporté au nombre de moles de (B) vaut au moins 1.

11. - Procédé selon l'une quelconque des revendications 1 à 10, **caractérisé en ce que** l'on introduit en outre dans le réacteur, à l'étape (1) et/ou à l'étape (2), (D) un ou plusieurs complexes d'un métal, à l'étage d'oxydation 0 ou à un étage d'oxydation strictement positif, choisi parmi les métaux de transition, les lanthanides, les actinides et les métaux de la famille IIIa, et d'un ligand de ce métal.

12. - Procédé selon l'une quelconque des revendications 1 à 10, **caractérisé en ce que** le contenu du réacteur, à l'étape (1) et à l'étape (2), est exempt de complexe d'un métal, à l'étage d'oxydation 0 ou à un étage d'oxydation strictement positif, choisi parmi les métaux de transition, les lanthanides, les actinides et les métaux de la famille IIIa, et d'un ligand de ce métal.

13. - Copolymères à blocs comprenant au moins un bloc de polymère de monomère(s) vinylique(s) fluoré(s), qui ont une masse moléculaire moyenne en nombre Mₙ supérieure à 1,5.10⁴ et un indice de polydispersité M_{w}/Mₙ inférieur à 1,60.

14. - Articles fabriqués en utilisant un ou plusieurs copolymères à blocs choisis parmi les copolymères à blocs préparés par le procédé selon l'une quelconque des revendications 1 à 12 et les copolymères à blocs selon la revendication 13.

## Claims

1. - A radical polymerization process for the preparation of block copolymers, at least one block of which is a polymer block of fluorinated vinyl monomer(s), employing
(A') one or more ethylenically unsaturated monomers, and
(B') one or more polymers of fluorinated vinyl monomer(s),
which comprises the stages according to which
(1') at least one fraction of (A') and at least one fraction of (B') are introduced into a reactor, then
(2') the contents of the reactor are reacted, while introducing therein the optional balance of (A') and the optional balance of (B'),
wherein the polymers of fluorinated vinyl monomer(s) (B') are selected from :
- the polymers prepared via a radical polymerization process for the preparation of polymers of fluorinated vinyl monomer(s) employing :
(A) one or more ethylenically unsaturated monomers, at least one of which is chosen from fluorinated vinyl monomers,
(B) molecular iodine, and
(C) one or more radical-generating agents chosen from diazo compounds, peroxides and dialkyldiphenylalkanes,
which comprises the stages according to which
(1) at least a fraction of each of the compounds (A), (B) and (C) is introduced into a reactor, then
(2) the contents of the reactor are reacted, while introducing therein the optional balance of each of the compounds (A), (B) and (C), until the step (2) is brought to an end; and
- the polymers prepared in a preliminary stage by the process claimed here according to the present claim 1.

2. - Process according to claim 1, **characterized in that** at least 50 mol % of (A) are composed of one or more ethylenically unsaturated monomers chosen from fluorinated vinyl monomers.

3. - Process according to claim 1 or 2, **characterized in that** the ethylenically unsaturated monomer or one of the ethylenically unsaturated monomers is vinylidene fluoride.

4. - Process according to claim 1, **characterized in that** (A) is composed of a single ethylenically unsaturated monomer which is a fluorinated vinyl monomer, at least 50 mol % of (A) being introduced into the reactor in stage (1).

5. - Process according to claim 1, **characterized in that** (A) is composed of several ethylenically unsaturated monomers, the ethylenically unsaturated monomers constituting (A) being introduced into the reactor according to the same introduction policy.

6. - Process according to claim 1, **characterized in that** (A) is composed of several ethylenically unsaturated monomers, one of the ethylenically unsaturated monomers constituting (A) being introduced into the reactor in stage (1), the other ethylenically unsaturated monomer or monomers constituting (A) being introduced into the reactor in stage (2), in as many times as the number of ethylenically unsaturated monomers constituting (A) minus 1, one after the other, each new introduction of an ethylenically unsaturated monomer into the reactor in stage (2) being carried out only after the ethylenically unsaturated monomer or monomers previously introduced into the reactor has (have) each reacted up to at least 50 mol %.

7. - Process according to claim 1, **characterized in that** (A) is composed of several ethylenically unsaturated monomers, one of the ethylenically unsaturated monomers constituting (A) being introduced into the reactor in stage (1), all or a fraction of the other ethylenically unsaturated monomer or monomers constituting (A) being introduced gradually into the reactor in stage (2).

8. - Process according to any one of claims 1 to 7, **characterized in that** the number of moles of (B) with respect to the number of moles of (A) has a value of at least 2.5 × 10⁻⁵_{.}

9. - Process according to any one of claims 1 to 8, **characterized in that** at least 50 mol % of (B) are introduced into the reactor in stage (1).

10. - Process according to any one of claims 1 to 9, **characterized in that** the number of moles of (C) with respect to the number of moles of (B) has a value of at least 1.

11. - Process according to any one of claims 1 to 10, **characterized in that** the following is additionally introduced into the reactor, in stage (1) and/or in stage (2) :
(D) one or more complexes of a metal, in the 0 oxidation state or in a strictly positive oxidation state, chosen from transition metals, lanthanides, actinides and metals from Group IIIa, and of a ligand of this metal.

12. - Process according to any one of claims 1 to 10, **characterized in that** the contents of the reactor, in stage (1) and in stage (2), are devoid of complex of a metal, in the 0 oxidation state or in a strictly positive oxidation state, chosen from transition metals, lanthanides, actinides and metals from Group IIIa, and of a ligand of this metal.

13. - Block copolymers comprising at least one block of polymer of fluorinated vinyl monomer or monomers, which have a number-average molecular mass Mₙ of greater than 1.5 × 10⁴ and a polydispersity index M_{w}/Mₙ of less than 1.60.

14. - Articles manufactured by using one or more block copolymers chosen from the block copolymers prepared by the processes according to any one of claims 1 to 12 and the block copolymers according to claim 13.

## Patentansprüche

1. Radikalisches Polymerisationsverfahren zur Herstellung von Blockcopolymeren, wobei es sich bei mindestens einem Block um einen Block eines oder mehrerer fluorierter Vinylmonomere handelt, unter Verwendung von :
(A') einem oder mehreren ethylenisch ungesättigten Monomeren und
(B') einem oder mehreren Polymeren eines oder mehrerer fluorierter Vinylmonomere,
bei dem man
(1') mindestens einen Teil von (A') und mindestens einen Teil von (B') in einen Reaktor einträgt und dann
(2') den Inhalt des Reaktors unter Eintragung des eventuellen Rests von (A') und des eventuellen Rests von (B') umsetzt ;
wobei das oder die Polymere eines oder mehrerer fluorierter Vinylmonomere (B') ausgewählt sind
- unter den nach einem radikalischen Polymerisationsverfahren zur Herstellung von Polymeren eines oder mehrerer fluorierter Vinylmonomere unter Verwendung von :
(A) einem oder mehreren ethylenisch ungesättigten Monomeren, von denen mindestens eines unter fluorierten Vinylmonomeren ausgewählt wird,
(B) molekularem Iod und
(C) einem oder mehreren Radikalbildnern, ausgewählt unter Diazoverbindungen, Peroxiden und Dialkyldiphenylalkanen,
bei dem man
(1) mindestens einen Teil jeder der Verbindungen (A), (B) und (C) in einen Reaktor einträgt und dann
(2) den Inhalt des Reaktors unter Eintragung des eventuellen Rests jeder der Verbindungen (A), (B) und (C) umsetzt
die Umsetzung beendet, hergestellten Polymeren und
- unter den in einem vorhergehenden Schritt nach dem hier gemäß dem vorliegenden Anspruch 1 beanspruchten Verfahren hergestellten Polymeren.

2. Verfahren nach Anspruch 1, **dadurch gekennzeichnet, daß** mindestens 50 Mol- % von (A) aus einem oder mehreren unter fluorierten Vinylmonomeren ausgewählten ethylenisch ungesättigten Monomeren bestehen.

3. Verfahren nach Anspruch 1 oder 2, **dadurch gekennzeichnet, daß** es sich bei dem ethylenisch ungesättigten Monomer oder einem der ethylenisch ungesättigten Monomere um Vinylidenfluorid handelt.

4. Verfahren nach Anspruch 1, **dadurch gekennzeichnet, daß** (A) aus einem einzigen ethylenisch ungesättigten Monomer besteht, bei dem es sich um ein fluoriertes Vinylmonomer handelt, wobei mindestens 50 Mol- % von (A) in Schritt (1) in den Reaktor eingetragen werden.

5. Verfahren nach Anspruch 1, **dadurch gekennzeichnet, daß** (A) aus mehreren ethylenisch ungesättigten Monomeren besteht, wobei die ethylenisch ungesättigten Monomere, aus denen (A) besteht, gemäß dem gleichen Eintragsregime in den Reaktor eingetragen werden.

6. Verfahren nach Anspruch 1, **dadurch gekennzeichnet, daß** (A) aus mehreren ethylenisch ungesättigten Monomeren besteht, wobei eines der ethylenisch ungesättigten Monomere, aus denen (A) besteht, in Schritt (1) in den Reaktor eingetragen wird und das oder die anderen ethylenisch ungesättigten Monomere, aus denen (A) besteht, in einer der Zahl der ethylenisch ungesättigten Monomere, aus denen (A) besteht, minus 1 entsprechenden Zahl von Malen nacheinander in Schritt (2) in den Reaktor eingetragen wird bzw. werden, wobei jede neue Eintragung eines ethylenisch ungesättigten Monomers in den Reaktor in Schritt (2) erst erfolgt, nachdem das oder die vorher in den Reaktor eingetragenen ethylenisch ungesättigten Monomere zu mindestens 50 Mol- % reagiert hat bzw. haben.

7. Verfahren nach Anspruch 1, **dadurch gekennzeichnet, daß** (A) aus mehreren ethylenisch ungesättigten Monomeren besteht, wobei eines der ethylenisch ungesättigten Monomere, aus denen (A) besteht, in Schritt (1) in den Reaktor eingetragen wird und das oder die anderen ethylenisch ungesättigten Monomere, aus denen (A) besteht, in Schritt (2) ganz oder teilweise allmählich in den Reaktor eingetragen wird bzw. werden.

8. Verfahren nach einem der Ansprüche 1 bis 7, **dadurch gekennzeichnet, daß** die Zahl der Mole von (B), bezogen auf die Zahl der Mole von (A), mindestens 2,5.10⁻⁵ beträgt.

9. Verfahren nach einem der Ansprüche 1 bis 8, **dadurch gekennzeichnet, daß** mindestens 50 Mol- % von (B) in Schritt (1) in den Reaktor eingetragen werden.

10. Verfahren nach einem der Ansprüche 1 bis 9, **dadurch gekennzeichnet, daß** die Zahl der Mole von (C), bezogen auf die Zahl der Mole von (B), mindestens 1 beträgt.

11. Verfahren nach einem der Ansprüche 1 bis 10, **dadurch gekennzeichnet, daß** man außerdem in Schritt (1) und/oder Schritt (2)
(D) einen oder mehrere Komplexe eines Metalls in der Oxidationsstufe 0 oder einer streng positiven Oxidationsstufe, ausgewählt unter Übergangsmetallen, Lanthaniden, Actiniden und Metallen der Gruppe IIIa, und eines Liganden dieses Metalls
in den Reaktor einträgt.

12. Verfahren nach einem der Ansprüche 1 bis 10, **dadurch gekennzeichnet, daß** der Inhalt des Reaktors in Schritt (1) und Schritt (2) frei von Komplex eines Metalls in der Oxidationsstufe 0 oder einer streng positiven Oxidationsstufe, ausgewählt unter Übergangsmetallen, Lanthaniden, Actiniden und Metallen der Gruppe IIIa, und eines Liganden dieses Metalls ist.

13. Blockcopolymere, enthaltend mindestens einen Block von Polymer eines oder mehrerer fluorierter Vinylmonomere, mit einem zahlenmittleren Molekulargewicht Mₙ von mehr als 1,5.10⁴ und einem Polydispersitätsindex M_{w}/Mₙ von weniger als 1,60.

14. Gegenstände, hergestellt unter Verwendung eines oder mehrerer Blockcopolymere, ausgewählt unter den nach dem Verfahren gemäß einem der Ansprüche 1 bis 12 hergestellten Blockcopolymeren und den Blockcopolymeren gemäß Anspruch 13.
